# EUROPÄISCHE PATENTSCHRIFT

(11) **EP 4 450 314 B1**
(45) Veröffentlichungstag und Bekanntmachung des Hinweises auf die Patenterteilung: **20.08.2025**
(21) Anmeldenummer: 23169233.6
(22) Anmeldetag: 21.04.2023
(51) Int. Cl.: B60K 17/10, B60T 1/06, F16D 55/40, F16D 59/02

(54) **ANTRIEBSSYSTEM SOWIE FAHRZEUG MIT EINEM ANTRIEBSSYSTEM**
DRIVE SYSTEM AND VEHICLE HAVING A DRIVE SYSTEM
SYSTÈME D'ENTRAÎNEMENT ET VÉHICULE ÉQUIPÉ D'UN SYSTÈME D'ENTRAÎNEMENT

(43) Veröffentlichungstag der Anmeldung: 23.10.2024
(73) Patentinhaber: IMS Gear SE & Co. KGaA, 78166 Donaueschingen (DE)
(72) Erfinder: Götz, Michael, 78467 Konstanz (DE); Breithaupt, Sebastian, 78052 Marbach (DE); Stöhr, Johannes, 78052 Villingen-Schwenningen (DE); Fürderer, Yvonne, 78120 Furtwangen (DE)
(74) Vertreter: Westphal, Mussgnug & Partner Patentanwälte mbB

(56) Entgegenhaltungen:
- EP-A1- 2 332 760
- US-A- 3 800 901
- US-A1- 2013 248 303

## Beschreibung

Die Erfindung betrifft ein Antriebssystem sowie ein Fahrzeug mit einem solchen Antriebssystem.

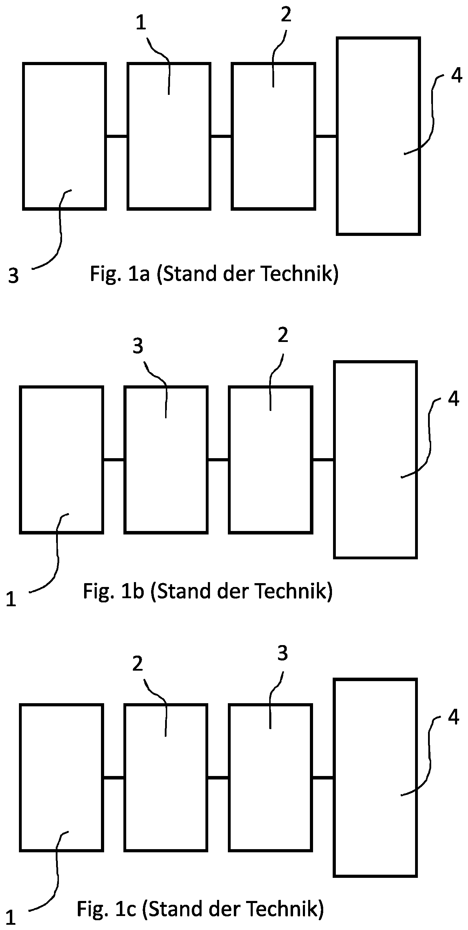

Verschiedene aus dem Stand der Technik bekannte Konzepte von Antriebssystemen für Fahrzeuge, wie insbesondere Flurförderzeuge, sind in den Fig. 1a bis 1c dargestellt. Sie umfassen in der Regel einen häufig als Elektromotor ausgebildeten Motor 1, ein Antriebsgetriebe 2, mindestens eine Bremse 3 sowie ein Laufrad 4 des Fahrzeugs. In Kraftflussrichtung des vom Motor 1 bereitgestellten Antriebsdrehmoments ist dabei das Antriebsgetriebe 2 nach dem Motor 1 und das Laufrad 4 nach dem Antriebsgetriebe 2 angeordnet, sodass der Motor 1 über das Antriebsgetriebe 2 das Laufrad 4 antreiben kann. Für die Anordnung der Bremse 3 sind aus dem Stand der Technik verschiedene Konzepte bekannt. So wird die Bremse 3 in bisher bekannten Antriebssystemen vor dem Motor 1 (Fig. 1a), zwischen dem Motor 1 und dem Antriebsgetriebe 2 (Fig. 1b) oder zwischen dem Antriebsgetriebe 2 und dem Laufrad 4 (Fig. 1c) angeordnet.

Bei den in den Fig. 1a und 1b dargestellten Beispielen wird das von der Bremse 3 bereitgestellte Bremsmoment durch das in der Regel untersetzende Antriebsgetriebe 2 gewandelt, sodass das von der Bremse 3 bereitgestellte Bremsmoment kleiner ausfällt als das am Laufrad 4 anliegende Bremsmoment. Allerdings befindet sich in diesen Fällen das Antriebsgetriebe 2 im Kraftfluss von der Bremse 3 zum Laufrad 4 und damit in dem sogenannten Sicherheitsstrang, einem sicherheitsrelevanten Abschnitt des Antriebssystems. Fällt das Antriebsgetriebe 2 aus, kann die Bremse 3 nicht mehr auf das Laufrad 4 einwirken. Das Antriebsgetriebe 2 - und im in Fig. 1a gezeigten Fall auch die entsprechenden Bauteile des Motors 1 - müssen daher mit einem entsprechend hohen Sicherheitsfaktor dimensioniert werden.

Wird stattdessen, wie in Fig. 1c gezeigt, die Bremse 3 zwischen dem Antriebsgetriebe 2 und dem Laufrad 4 angeordnet, also beispielsweise direkt am zu bremsenden Laufrad 4, muss die Bremse 3 entsprechend der fehlenden Untersetzung durch das Antriebsgetriebe 2 größer dimensioniert werden.

Die bekannten Antriebssysteme weisen deshalb nachteilige Eigenschaften hinsichtlich Ihres Bauraumbedarfs und/oder ihrer Masse, insbesondere im Bereich des Antriebsgetriebes bzw. der Bremse, auf.

Als druckschriftlicher Stand der Technik werden die US 3 800 901 A, die EP 2 332 760 A1 sowie die US 2013/248303 A1 genannt.

Der Erfindung liegt daher die Aufgabe zugrunde, ein Antriebssystem bereitzustellen, das einen geringen Bauraumbedarf sowie eine geringe Masse aufweist und darüber hinaus einfach herstellbar ist. Der Erfindung liegt außerdem die Aufgabe zugrunde, ein Fahrzeug mit einem solchen Antriebssystem bereitzustellen.

Die Aufgabe wird erfindungsgemäß gelöst durch ein Antriebssystem mit den Merkmalen des Patentanspruchs 1 sowie ein Fahrzeug mit den Merkmalen des Patentanspruchs 14.

Vorteilhafte Ausgestaltungen und Weiterbildungen der Erfindung sind in den abhängigen Ansprüchen angegeben.

Ein erfindungsgemäßes Antriebssystem, insbesondere für eine Fahrzeug, umfasst eine Abtriebseinheit, eine Antriebseinheit zum Antreiben der Abtriebseinheit, eine Antriebsschnittstelle, mittels der die Abtriebseinheit mit der Antriebseinheit koppelbar ist, mindestens eine Bremseinheit zum Bremsen der Abtriebseinheit, und mindestens eine von der Antriebsschnittstelle verschiedene Bremsschnittstelle, mittels der die Abtriebseinheit mit der mindestens einen Bremseinheit koppelbar ist, wobei die mindestens eine Bremsschnittstelle eine Getriebestufe mit einer an der Abtriebseinheit angeordneten abtriebsseitigen Getriebekomponente und einer an der mindestens einen Bremseinheit angeordneten bremsseitigen Getriebekomponente aufweist. Insbesondere hinsichtlich des Kraftflusses in dem Antriebssystem ist die Bremseinheit damit vorzugsweise parallel zu der Antriebseinheit angeordnet. Durch einen derartigen Aufbau kann der Sicherheitsstrang möglichst kurz ausgebildet werden. Insbesondere kann das Antriebssystem so ausgebildet werden, dass die Antriebseinheit nicht in den Sicherheitsstrang eingebunden ist. Die Antriebseinheit kann somit kleiner und leichter dimensioniert werden. Darüber hinaus erlaubt die erfindungsgemäße Anordnung eine Drehmomentuntersetzung zwischen der Bremseinheit und der Abtriebseinheit. Damit kann auch die Bremse entsprechend klein und leicht ausgelegt werden. Insgesamt kann das erfindungsgemäße Antriebssystem damit kleiner und leichter ausgebildet werden.

Die Antriebseinheit umfasst vorzugsweise einen insbesondere als Elektromotor ausgebildeten Motor sowie ein von der Getriebestufe der mindestens einen Bremsschnittstelle verschiedenes Antriebsgetriebe. Die Getriebestufe der mindestens einen Bremsschnittstelle ist vorzugsweise als Zahnradpaarung ausgebildet. Die Anzahl der mindestens einen Bremsschnittstelle entspricht vorzugsweise der Anzahl der mindestens einen Bremseinheit. Besonders bevorzugt ist jeder der mindestens einen Bremseinheit genau eine der mindestens einen Bremsschnittstelle zugeordnet.

Vorzugsweise weist jede der mindestens einen Bremsschnittstelle genau eine Getriebestufe auf. Sofern die Getriebestufe als Zahnradpaarung ausgebildet ist, weist die mindestens eine Getriebestufe damit genau eine Zahnradpaarung, also zwei miteinander in Eingriff bringbare Zahnräder, auf. Damit kann die mindestens eine Bremsschnittstelle mit einer geringen Anzahl an Bauteilen und damit vorteilhaft insbesondere im Hinblick auf die Masse und den benötigten Bauraum ausgebildet sein.

Die abtriebsseitige Getriebekomponente kann als innenverzahntes Hohlrad ausgebildet sein. Eine derartige abtriebsseitige Getriebekomponente kann besonders raumsparend an der Abtriebseinheit angeordnet sein und dabei ein großes Untersetzungsverhältnis ermöglichen. Darüber hinaus kann die als innenverzahntes Hohlrad ausgebildete abtriebsseitige Getriebekomponente je nach Anwendungsfall leicht mit mehreren bremsseitigen Getriebekomponenten gekoppelt werden.

Die bremsseitige Getriebekomponente kann als außenverzahntes Ritzel ausgebildet sein. Das Ritzel kann damit als Stirnrad ausgebildet sein. Vorzugsweise steht das Ritzel mit dem Hohlrad im Eingriff. Besonders bevorzugt sind die Achsen des Hohlrads und des Ritzels parallel zueinander angeordnet.

Das Ritzel ist bevorzugt auf einer Bremswelle der Bremseinheit angeordnet. So kann der Sicherheitsstrang möglichst kurz gehalten werden. Besonders bevorzugt ist die Verzahnung des Ritzels in die Bremswelle integriert. So kann die Anzahl der im Sicherheitsstrang befindlichen Bauteile weiter reduziert werden.

Die Abtriebseinheit ist erfindungsgemäß als Laufrad ausgebildet. Bei der Abtriebseinheit handelt sich damit vorzugsweise um die Einheit, die eine mechanische Interaktion mit der dem Antriebssystem übergeordneten Vorrichtung, wie beispielsweise eines Fahrzeugs, mit einer Umgebung herstellt. Der Sicherheitsstrang kann damit besonders kurz und bauteilarm ausgebildet sein. Das Rad kann zwei einander gegenüberliegende Radstirnseiten, eine Radinnenmantelfläche sowie eine Radaußenmantelfläche aufweisen. Die abtriebsseitige Getriebekomponente kann insbesondere an einer der Radstirnseiten und/oder an der Radinnenmantelfläche und/oder an der Radaußenmantelfläche angeordnet sein. Vorzugsweise ist das Hohlrad an der Radinnenmantelfläche angeordnet. Die bremsseitige Getriebekomponente, insbesondere das Ritzel, kann so beim Eingriff in das Hohlrad in die Kontur des Rads axial eingreifend angeordnet sein. Dadurch kann der axiale Bauraum des Antriebssystems verkürzt werden. Unter dem Laufrad wird hier und im Folgenden vorzugsweise ein Rad eines Fahrzeugs verstanden, das den Kontakt zwischen dem Fahrzeug und der Umgebung herstellt, gegenüber der das Fahrzeug relativ bewegbar ist. Das Laufrad kann im Wesentlichen der Übertragung der Fahrzeugkräfte, insbesondere Brems-, Beschleunigungs- und/oder Querkräfte, auf die Umgebung, insbesondere eine Fahrbahn, dienen.

In einer bevorzugten Ausführungsform der Erfindung weist das Rad einen, vorzugsweise trichterförmigen, Radträger auf, der ein erstes Radträgerteil und ein zweites Radträgerteil umfasst, wobei die abtriebsseitige Getriebekomponente an dem zweiten Radträgerteil angeordnet ist. Der Radträger kann mindestens einen zylindrischen Abschnitt umfassen. Alternativ kann der Radträger vollständig zylindrisch ausgebildet sein. Das zweite Radträgerteil umfasst dabei vorzugsweise den Ab-Vorzugsweise ist der Radträger drehfest mit einer Radfelge gekoppelt, die radial außerhalb des Radträgers angeordnet ist. Dadurch kann die Radfelge ausgetauscht werden, ohne dass die Bremsschnittstelle und/oder die Antriebsschnittstelle getauscht werden muss. Besonders bevorzugt ist der Radträger unmittelbar anliegend an die Radfelge angeordnet.

In einer bevorzugten Ausführungsform der Erfindung ist die Antriebseinheit zumindest teilweise, vorzugsweise vollständig, in dem Radträger angeordnet. Dadurch kann das Antriebssystem einen besonders geringen Bauraumbedarf aufweisen. Besonders bevorzugt ist die Antriebseinheit vollständig in dem Radträger angeordnet.

Die Bremseinheit ist vorzugsweise als Federdruckbremse mit einem ersten Reibpartner und einem zweiten Reibpartner ausgebildet, wobei der erste Reibpartner drehfest auf einer Bremswelle der Bremseinheit angeordnet ist. Vorzugsweise weist die Bremseinheit genau eine Bremswelle auf. Bevorzugt sind das Ritzel und der erste Reibpartner somit auf derselben Bremswelle angeordnet. Damit kann wiederum eine besonders kompakte, eine geringe Teileanzahl umfassende Bauform des Antriebssystems erreicht werden. Der zweite Reibpartner kann feststehend angeordnet sein, beispielweise indem er mit einem Rahmenbauteil des das Antriebssystem umfassende Fahrzeugs gekoppelt ist. Bei einem Bremsvorgang werden vorzugsweise der erste Reibpartner und der zweite Reibpartner axial gegeneinander gedrückt und so in einen Reibkontakt gebracht. Dafür kann der erste Reibpartner axial beweglich gegenüber der Bremswelle angeordnet sein. Vorzugsweise ist die Bremseinheit derart ausgebildet, dass sie in unbetätigtem Zustand geschlossen ist. Durch eine Bestromung der Bremseinheit kann das Antriebssystem somit in einem ungebremsten Zustand gebracht werden. Durch einen derartigen Aufbau kann das Antriebssystem insbesondere bei einem Ausfall der Stromversorgung automatisch in einen gebremsten und damit sicheren Zustand versetzt werden.

Alternativ kann die mindestens eine Bremseinheit durch eine Bremse eines beliebigen bekannten Bremsentyps gebildet sein, beispielsweise durch eine Magnetbremse.

In einer Weiterbildung der Erfindung umfasst die mindestens eine Bremseinheit eine Mehrzahl von Bremseinheiten und das Antriebssystem weist eine entsprechende Anzahl an Bremsschnittstellen aufweist. Vorzugsweise ist damit für jede der Bremseinheiten genau eine Bremsschnittstelle vorhanden. Besonders bevorzugt umfasst die mindestens eine Bremseinheit genau zwei Bremseinheiten. Das Antriebssystem weist in diesem Fall vorzugsweise genau zwei Bremsschnittstellen auf. Damit kann hinsichtlich der Bremseinheiten eine Redundanz geschaffen und damit eine höhere Sicherheit erreicht werden. Darüber hinaus können die zwei Bremseinheiten beim Bremsvorgang zusammenwirken und damit eine größer dimensionierte Bremseinheit ersetzen. Somit ergeben sich hinsichtlich des von der Antriebseinheit beanspruchten Bauraums zusätzliche Gestaltungsmöglichkeiten.

Die bremsseitige Getriebekomponente jeder der Bremseinheiten ist vorzugsweise mit derselben abtriebsseitigen Getriebekomponente koppelbar. So können die beiden Bremsschnittstellen unterschiedliche bremsseitige Getriebekomponenten aber dieselbe abtriebsseitige Getriebekomponente umfassen. Dadurch können mehrere Bremseinheiten auf einfache Weise mit einer Abtriebseinheit gekoppelt werden. Ist die bremsseitige Getriebekomponente als Ritzel und die abtriebsseitige Getriebekomponente als Hohlrad ausgebildet, können beispielsweise die Ritzel mehrerer, insbesondere zweier, Bremseinheiten, mit demselben Hohlrad im Eingriff stehen.

Ein erfindungsgemäßes Fahrzeug umfasst ein zuvor beschriebenes Antriebssystem. Das Fahrzeug kann als Flurförderzeug, insbesondere als Gabelstapler oder fahrerloses Transportsystem, ausgebildet sein.

Vorzugsweise umfasst das Fahrzeug, wie bei Flurförderzeugen üblich, drei voneinander verschiedene Bremssysteme, nämlich eine Betriebsbremse, eine Haltebremse und eine Notbremse. Bevorzugt ist, insbesondere ausschließlich, die Notbremse, durch die zuvor beschriebene mindestens eine Bremseinheit des Antriebssystems gebildet.

Ein Ausführungsbeispiel der Erfindung wird anhand der nachfolgenden Figuren erläutert. Es zeigt:
- Figur 1a: eine Darstellung eines ersten aus dem Stand der Technik bekannten Prinzips eines Antriebssystems,
- Figur 1b: eine Darstellung eines zweiten aus dem Stand der Technik bekannten Prinzips eines Antriebssystems,
- Figur 1c: eine Darstellung eines dritten aus dem Stand der Technik bekannten Prinzips eines Antriebssystems,
- Figur 2: eine Darstellung eines Prinzips eines erfindungsgemäßen Antriebssystems,
- Figur 3a: eine Schnittansicht eines Ausführungsbeispiels eines erfindungsgemäßen Antriebssystems,
- Figur 3b: eine Detailansicht eines Teils der Bremseinheit des in Figur 3a gezeigten Ausführungsbeispiels.

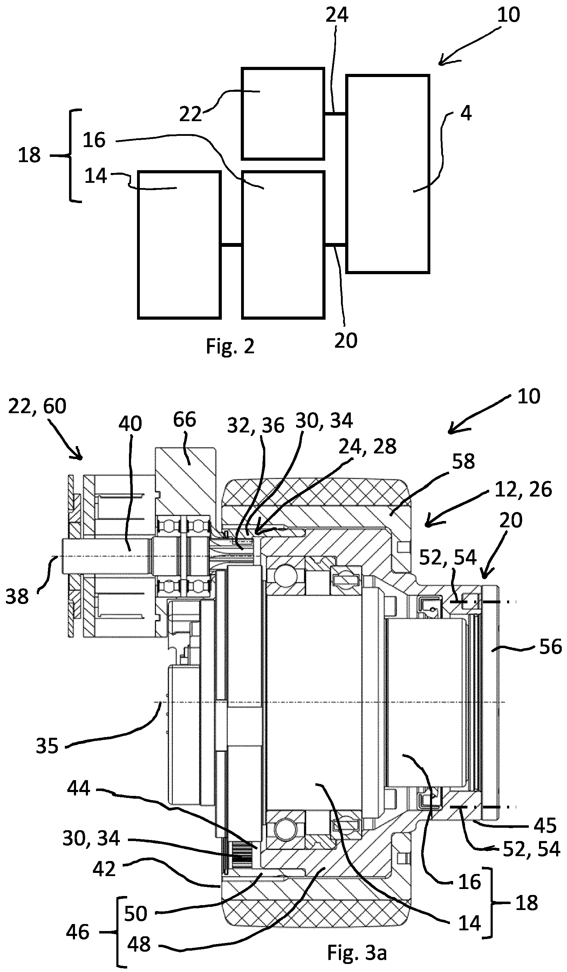

Die Figuren 2 bis 3b zeigen eine Prinzipdarstellung und verschiedene Ansichten eines Ausführungsbeispiels. Für gleiche und funktionsgleiche Teile werden die gleichen Bezugszeichen verwendet Der Übersichtlichkeit halber werden nicht alle Bezugszeichen in jeder Figur verwendet.

Fig. 2 zeigt eine Prinzipdarstellung eines erfindungsgemäßen Antriebssystems 10 mit einer Abtriebseinheit 12 und einer einen Elektromotor 14 und ein Antriebsgetriebe 16 umfassenden Antriebseinheit 18 zum Antreiben der Abtriebseinheit 12. Mittels einer Antriebsschnittstelle 20, ist die Abtriebseinheit 12 mit der Antriebseinheit 18 koppelbar. Das Antriebssystem 10 umfasst außerdem mindestens eine Bremseinheit 22 zum Bremsen der Abtriebseinheit 12, und mindestens eine von der Antriebsschnittstelle 20 verschiedene Bremsschnittstelle 24, mittels der die Abtriebseinheit 12 mit der mindestens einen Bremseinheit 22 koppelbar ist. Hinsichtlich des Kraftflusses in dem Antriebssystem 10 ist die Bremseinheit 22 damit vorzugsweise parallel zu der Antriebseinheit 18 angeordnet.

Fig. 3a zeigt anhand eines Ausführungsbeispiels eine konstruktive Ausgestaltung des Antriebssystems 10. Darin sind ebenfalls die den Elektromotor 14 und das Antriebsgetriebe 16 umfassende Antriebseinheit 18 sowie die Bremseinheit 22 erkennbar. Die Abtriebseinheit 12 ist vorzugsweise als Laufrad 26 eines Flurförderzeugs ausgebildet. Die Bremsschnittstelle 24 weist genau eine Getriebestufe 28 mit einer an der Abtriebseinheit 12 angeordneten abtriebsseitigen Getriebekomponente 30 und einer an der Bremseinheit 22 angeordneten bremsseitigen Getriebekomponente 32 auf. Die Schnittdarstellung in Fig. 3a veranschaulicht dabei, dass die Getriebestufe 28 der Bremsschnittstelle 24 völlig unabhängig von dem Antriebsgetriebe 16 der Antriebseinheit 18 ist. Sowohl anhand der Prinzipdarstellung in Fig. 2 als auch anhand des in Fig. 3a gezeigten Ausführungsbeispiels wird deutlich, dass von der Bremseinheit 22 bis zur Abtriebseinheit 12 verlaufende Sicherheitsstrang gegenüber den aus dem Stand der Technik bekannten Lösungen deutlich kürzer ausgebildet werden kann. Insbesondere ist die Antriebseinheit 18 nicht in den Sicherheitsstrang eingebunden.

Im in Fig. 3a gezeigten Ausführungsbeispiel ist die abtriebsseitige Getriebekomponente 30 als innenverzahntes Hohlrad 34 mit einer Hohlradachse 35 ausgebildet. Die bremsseitige Getriebekomponente 32 ist als außenverzahntes Ritzel 36 mit einer Ritzelachse 38 ausgebildet. Das Ritzel 36 steht mit dem Hohlrad im Eingriff. Dabei sind die Hohlradachse 35 und die Ritzelachse 38 parallel zueinander angeordnet. Das Ritzel 36 ist auf einer Bremswelle 40 der Bremseinheit 22 angeordnet, indem die Verzahnung des Ritzels 36 in die Bremswelle 40 integriert ist.

Das Laufrad 26 kann zwei einander gegenüberliegende Radstirnseiten 42, eine Radinnenmantelfläche 44 sowie eine Radaußenmantelfläche 45 aufweisen. Die abtriebsseitige Getriebekomponente 30 kann an einer der Radstirnseiten 42 und/oder an der Radinnenmantelfläche 44 und/oder an der Radaußenmantelfläche 45 angeordnet sein. Im in Fig. 3a gezeigten Ausführungsbeispiel ist die als Hohlrad 34 ausgebildete abtriebsseitige Getriebekomponente 30 an der Radinnenmantelfläche 44 angeordnet. Das Ritzel 36 ist somit beim Eingriff in das Hohlrad 34 in die Kontur des Laufrads 26 axial eingreifend angeordnet. Dadurch kann insbesondere der axiale Bauraum des Antriebssystems 10 verkürzt werden.

Das Laufrad 26 weist einen trichterförmigen Radträger 46 auf, der ein erstes Radträgerteil 48 und ein zweites Radträgerteil 50 umfasst, wobei das Hohlrad 34 an dem zweiten Radträgerteil 50 angeordnet ist. Das zweite Radträgerteil 50 umfasst dabei den Abschnitt des trichterförmigen Radträgers 46, der den größten Innendurchmesser aufweist. Dadurch kann das Ritzel 36 besonders gut mit dem Hohlrad 34 gekoppelt und ein besonders großes Untersetzungsverhältis bei geringem zusätzlichem Bauraumbedarf erreicht werden. Im in Fig. 3a gezeigten Ausführungsbeispiel ist das zweite Radträgerteil 50 lösbar an dem ersten Radträgerteil 48 angeordnet. Damit kann das zweite Radträgerteil 50 und damit auch das Hohlrad 34 besonders leicht ausgetauscht werden. In einer alternativen, nicht dargestellten Ausführungsform der Erfindung ist der Radträger 46 einstückig ausgebildet.

Das in Fig. 3a dargestellte erste Radträgerteil 48 weist außerdem eine abtriebsseitige Komponente 52 der Antriebsschnittstelle 20 auf. Die abtriebsseitige Komponente 52 weist mehrere Bohrungen 54 auf, mittels derer ein Antriebsgetriebeausgang 56 des Antriebsgetriebes 16 der Antriebseinheit 18 mit dem ersten Radträgerteil 48 gekoppelt ist.

Der Radträger 46 ist drehfest mit einer Radfelge 58 gekoppelt, die radial außerhalb des Radträgers 46 angeordnet ist. Dabei ist der Radträger 46 unmittelbar anliegend an die Radfelge 58 angeordnet. Außerdem ist die Antriebseinheit 18 zumindest vollständig in dem Radträger 46 angeordnet.

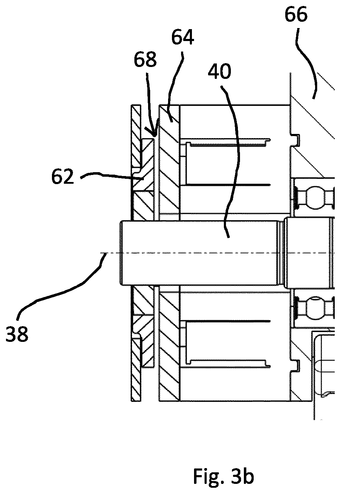

Eine Detailansicht eines Teils der Bremseinheit 22 des in Figur 3a gezeigten Ausführungsbeispiels findet sich in Fig. 3b. Darin ist erkennbar, dass die Bremseinheit 22 als Federdruckbremse 60 mit einem ersten Reibpartner 62 und einem zweiten Reibpartner 64 ausgebildet ist, wobei der erste Reibpartner 62 drehfest auf der Bremswelle 40 der Bremseinheit 22 angeordnet ist. Vorzugsweise weist die Bremseinheit genau eine Bremswelle auf. Der zweite Reibpartner 64 ist fest an das das Antriebssystem 10 umfassende Fahrzeugs, beispielsweise an ein Rahmenbauteil 66 gekoppelt. Bei einem Bremsvorgang werden der erste Reibpartner 62 und der zweite Reibpartner 64 axial gegeneinander gedrückt und so in einen Reibkontakt gebracht. Dafür ist der erste Reibpartner 62 axial beweglich gegenüber der Bremswelle 40 angeordnet. Vorzugsweise ist die Federdruckbremse 60 derart ausgebildet, dass sie in unbetätigtem Zustand geschlossen ist. Durch eine Bestromung kann die Federduckbremse 60 gelüftet und das Antriebssystem 10 somit in einem ungebremsten Zustand gebracht werden. Wie an einem Spalt 68 erkennbar ist, ist dieser Zustand in den Fig. 3a u. 3b dargestellt.

Das Antriebssystem 10 kann entsprechend der in Fig. 3a dargestellten Anordnung eine Mehrzahl von Bremseinheiten 22 aufweisen, deren Ritzelachsen 38 auf einer Kreisbahn um die die Hohlradachse 35 angeordnet sind. So kann zwischen jedem der Ritzel 36 der Bremseinheiten 22 und dem Hohlrad 34 jeweils eine Bremsschnittstelle 24 angeordnet sein. Besonders bevorzugt umfasst das Antriebssystem 10 genau zwei der Bremseinheiten 22.

### Bezugszeichenliste

- 1: Motor
- 2: Antriebsgetriebe
- 3: Bremse
- 4: Laufrad
- 10: Antriebssystem
- 12: Abtriebseinheit
- 14: Elektromotor
- 16: Antriebsgetriebe
- 18: Antriebseinheit
- 20: Antriebsschnittstelle
- 22: Bremseinheit
- 24: Bremsschnittstelle
- 26: Laufrad
- 28: Getriebestufe
- 30: abtriebsseitige Getriebekomponente
- 32: bremsseitige Getriebekomponente
- 34: Hohlrad
- 35: Hohlradachse
- 36: Ritzel
- 38: Ritzelachse
- 40: Bremswelle
- 42: Radstirnseite
- 44: Radinnenmantelfläche
- 45: Radaußenmantelfläche
- 46: Radträger
- 48: erstes Radträgerteil
- 50: zweites Radträgerteil
- 52: abtriebsseitige Komponente
- 54: Bohrung
- 56: Antriebsgetriebeausgang
- 58: Radfelge
- 60: Federdruckbremse
- 62: erster Reibpartner
- 64: zweiter Reibpartner
- 66: Rahmenbauteil
- 68: Spalt

## Patentansprüche

1. Antriebssystem (10), insbesondere für eine Fahrzeug, mit
• einer Abtriebseinheit (12),
• einer Antriebseinheit (18) zum Antreiben der Abtriebseinheit (12),
• einer Antriebsschnittstelle (20), mittels der die Abtriebseinheit (12) mit der Antriebseinheit (18) koppelbar ist,
• mindestens einer Bremseinheit (22) zum Bremsen der Abtriebseinheit (12), und
• mindestens einer von der Antriebsschnittstelle (20) verschiedenen Bremsschnittstelle (24), mittels der die Abtriebseinheit (12) mit der mindestens einen Bremseinheit (22) koppelbar ist,
wobei die mindestens eine Bremsschnittstelle (24) eine Getriebestufe (28) mit einer an der Abtriebseinheit (12) angeordneten abtriebsseitigen Getriebekomponente (30) und einer an der mindestens einen Bremseinheit (22) angeordneten bremsseitigen Getriebekomponente (32) aufweist, **dadurch gekennzeichnet, dass** die Abtriebseinheit (12) als Laufrad (26) ausgebildet ist.

2. Antriebssystem nach Anspruch 1,
**dadurch gekennzeichnet, dass**
jede der mindestens einen Bremsschnittstelle (24) genau eine Getriebestufe (28) aufweist.

3. Antriebssystem nach einem der vorhergehenden Ansprüche,
**dadurch gekennzeichnet, dass**
die abtriebsseitige Getriebekomponente (30) als innenverzahntes Hohlrad (34) ausgebildet ist.

4. Antriebssystem nach einem der vorhergehenden Ansprüche,
**dadurch gekennzeichnet, dass**
die bremsseitige Getriebekomponente (32) als außenverzahntes Ritzel (36) ausgebildet ist.

5. Antriebssystem nach Anspruch 4,
**dadurch gekennzeichnet, dass**
das Ritzel (36) auf einer Bremswelle (40) der Bremseinheit (22) angeordnet ist.

6. Antriebssystem nach einem der vorhergehenden Ansprüche,
**dadurch gekennzeichnet, dass**
das Rad einen, vorzugsweise trichterförmigen, Radträger (46) aufweist, umfassend ein erstes Radträgerteil (48) und ein zweites Radträgerteil (50), wobei die abtriebsseitige Getriebekomponente (30) an dem zweiten Radträgerteil (50) angeordnet ist.

7. Antriebssystem nach Anspruch 6,
**dadurch gekennzeichnet, dass**
das zweite Radträgerteil (50) lösbar an dem ersten Radträgerteil (48) angeordnet oder der Radträger (46) einstückig ausgebildet ist.

8. Antriebssystem nach einem der vorhergehenden Ansprüche,
**dadurch gekennzeichnet, dass**
das erste Radträgerteil (48) eine abtriebsseitige Komponente (52) der Antriebsschnittstelle (20) aufweist.

9. Antriebssystem nach einem der vorhergehenden Ansprüche,
**dadurch gekennzeichnet, dass**
der Radträger (46) drehfest mit einer Radfelge (58) gekoppelt ist, die radial außerhalb des Radträgers (46) angeordnet ist.

10. Antriebssystem nach einem der vorhergehenden Ansprüche,
**dadurch gekennzeichnet, dass**
die Antriebseinheit (18) zumindest teilweise, vorzugsweise vollständig, in dem Radträger (46) angeordnet ist.

11. Antriebssystem nach einem der vorhergehenden Ansprüche,
**dadurch gekennzeichnet, dass**
die Bremseinheit (22) als Federdruckbremse (60) mit einem ersten Reibpartner (62) und einem zweiten Reibpartner (64) ausgebildet ist, wobei der erste Reibpartner (62) drehfest auf einer Bremswelle (40) der Bremseinheit (22) angeordnet ist.

12. Antriebssystem nach einem der vorhergehenden Ansprüche,
**dadurch gekennzeichnet, dass**
die mindestens eine Bremseinheit (22) eine Mehrzahl von Bremseinheiten (22), insbesondere zwei Bremseinheiten (22), umfasst, und das Antriebssystem (10) eine entsprechende Anzahl an Bremsschnittstellen (24) aufweist.

13. Antriebssystem nach Anspruch 12,
**dadurch gekennzeichnet, dass**
die bremsseitige Getriebekomponente (32) jeder der Bremseinheiten (22) mit derselben abtriebsseitigen Getriebekomponente (30) koppelbar ist.

14. Fahrzeug, insbesondere Flurförderzeug, mit einem Antriebssystem (10) nach einem der vorhergehenden Ansprüche.

## Claims

1. A drive system (10), in particular for a vehicle, with
• an output unit (12),
• a drive unit (18) for driving the output unit (12),
• a drive interface (20) by means of which the output unit (12) can be coupled to the drive unit (18),
• at least one brake unit (22) for braking the output unit (12), and
• at least one brake interface (24) different from the drive interface (20), by means of which the output unit (12) can be coupled to the at least one brake unit (22),
wherein the at least one brake interface (24) has a gear stage (28) with an output-side gear component (30) arranged on the output unit (12) and a brake-side gear component (32) arranged on the at least one brake unit (22),
**characterized in that**
the output unit (12) is designed as a travel wheel (26).

2. The drive system according to claim 1,
**characterized in that**
each of the at least one brake interface (24) has exactly one gear stage (28).

3. The drive system according to any one of the preceding claims,
**characterized in that**
the output-side gear component (30) is designed as an internally toothed ring gear (34).

4. The drive system according to any one of the preceding claims,
**characterized in that**
the brake-side gear component (32) is designed as an externally toothed pinion (36).

5. The drive system according to claim 4,
**characterized in that**
the pinion (36) is arranged on a brake shaft (40) of the brake unit (22).

6. The drive system according to any one of the preceding claims,
**characterized in that**
the wheel has a preferably funnel-shaped wheel carrier (46), comprising a first wheel carrier part (48) and a second wheel carrier part (50), wherein the output-side gear component (30) is arranged on the second wheel carrier part (50).

7. The drive system according to claim 6,
**characterized in that**
the second wheel carrier part (50) is detachably arranged on the first wheel carrier part (48) or the wheel carrier (46) is formed in one piece.

8. The drive system according to any one of the preceding claims,
**characterized in that**
the first wheel carrier part (48) has an output-side component (52) of the drive interface (20).

9. The drive system according to any one of the preceding claims,
**characterized in that**
the wheel carrier (46) is non-rotatably coupled to a wheel rim (58) which is arranged radially outside the wheel carrier (46).

10. The drive system according to any one of the preceding claims,
**characterized in that**
the drive unit (18) is arranged at least partially, preferably completely, in the wheel carrier (46).

11. The drive system according to any one of the preceding claims,
**characterized in that**
the brake unit (22) is designed as a spring pressure brake (60) with a first friction partner (62) and a second friction partner (64), wherein the first friction partner (62) is arranged in a rotationally fixed manner on a brake shaft (40) of the brake unit (22).

12. The drive system according to any one of the preceding claims,
**characterized in that**
the at least one brake unit (22) comprises a plurality of brake units (22), in particular two brake units (22), and the drive system (10) has a corresponding number of brake interfaces (24).

13. The drive system according to claim 12,
**characterized in that**
the brake-side gear component (32) of each of the brake units (22) can be coupled to the same output-side gear component (30).

14. A vehicle, in particular a forklift truck, with a drive system (10) according to any one of the preceding claims.

## Revendications

1. Système (10) d'entraînement, en particulier pour un véhicule, comprenant
• une unité (12) de sortie,
• une unité (18) d'entraînement pour l'entraînement de l'unité (12) de sortie,
• une interface (20) d'entraînement, au moyen de laquelle l'unité (12) d'entraînement peut être accouplée à l'unité (18) d'entraînement,
• au moins une unité (22) de freinage pour le freinage de l'unité (12) de sortie, et
• différente de l'interface (20) d'entraînement, au moins une interface (24) de freinage, au moyen de laquelle l'unité (12) de sortie peut être accouplée à la au moins une unité (22) de freinage,
dans lequel la au moins une interface (24) de freinage a un étage (28) de transmission ayant un composant (30) de transmission du côté de la sortie, monté sur l'unité (12) de sortie et un composant (32) de transmission du côté du freinage monté sur la au moins une unité (22) de freinage,
**caractérisé en ce que**
l'unité (12) de sortie est constituée sous la forme d'une roue (26) mobile.

2. Système d'entraînement suivant la revendication 1,
**caractérisé en ce que**
chacune de la au moins une interface (24) de freinage a exactement un étage (28) de transmission.

3. Système d'entraînement suivant l'une des revendications précédentes,
**caractérisé en ce que**
le composant (30) de transmission du côté de la sortie est constitué sous la forme d'une roue (34) creuse à denture intérieure.

4. Système d'entraînement suivant l'une des revendications précédentes,
**caractérisé en ce que**
le composant (32) de transmission du côté du freinage est constitué sous la forme d'un pignon (36) à denture extérieure.

5. Système d'entraînement suivant la revendication 4,
**caractérisé en ce que**
le pignon (36) est monté sur un arbre (40) de frein de l'unité (22) de freinage.

6. Système d'entraînement suivant l'une des revendications précédentes,
**caractérisé en ce que**
la roue a un support (46) de roue, de préférence en forme de trémie, comprenant une première partie (48) de support de roue et une deuxième partie (50) de support de roue, dans lequel le composant (30) d'entraînement du côté de la sortie est monté sur la deuxième partie (50) du support de roue.

7. Système d'entraînement suivant la revendication 6,
**caractérisé en ce que**
la deuxième partie (50) du support de roue est montée de manière amovible sur la première partie (48) du support de roue ou le support (46) de roue est constitué d'une seule pièce.

8. Système d'entraînement suivant l'une des revendications précédentes,
**caractérisé en ce que**
la première partie (48) du support de roue a un composant (52), du côté de la sortie, de l'interface (20) d'entraînement.

9. Système d'entraînement suivant l'une des revendications précédentes,
**caractérisé en ce que**
le support (46) de roue est solidaire en rotation d'une jante (58) de roue, qui est disposée radialement à l'extérieur du support (46) de roue.

10. Système d'entraînement suivant l'une des revendications précédentes,
**caractérisé en ce que**
l'unité (18) d'entraînement est au moins en partie, de préférence entièrement, disposée dans le support (46) de roue.

11. Système d'entraînement suivant l'une des revendications précédentes,
**caractérisé en ce que**
l'unité (22) de freinage est constituée sous la forme d'un frein (60) à pression de ressort ayant un premier partenaire (62) de friction et un deuxième partenaire (64) de friction, dans lequel le premier partenaire (62) de friction est solidaire en rotation d'un arbre (40) de frein de l'unité (22) de freinage.

12. Système d'entraînement suivant l'une des revendications précédentes,
**caractérisé en ce que**
la au moins une unité (22) de freinage comprend une pluralité d'unités (22) de freinage, en particulier deux unités (22) de freinage, et le système (10) d'entraînement a un nombre correspondant d'interfaces (24) de freinage.

13. Système d'entraînement suivant la revendication 12,
**caractérisé en ce que**
le composant (32) d'entraînement du côté du freinage de chacune des unités (22) de freinage peut être accouplé au même composant (30) de transmission du côté de la sortie.

14. Véhicule, en particulier, de convoyage au sol, comprenant un système (10) d'entraînement suivant l'une des revendications précédentes.
